# EUROPEAN PATENT SPECIFICATION

(11) **EP 0 554 691 B1**
(45) Date of publication and mention of the grant of the patent: **27.03.1996**
(21) Application number: 93100605.0
(22) Date of filing: 16.01.1993
(51) Int. Cl.: B01D 53/34

(54) **Process for treating flue gas**
Verfahren zur Behandlung von Rauchgas
Procédé de traitement de gaz de fumée

(30) Priority: 03.02.1992 JP 17677/92
(43) Date of publication of application: 11.08.1993
(73) Proprietor: MITSUBISHI JUKOGYO KABUSHIKI KAISHA, Tokyo (JP)
(72) Inventor: Ukawa, Naohiko, Mitsubishi Jukogyo K.K., Nishi-ku, Hiroshima-shi, Hiroshima-ken (JP); Okino, Susumu, Mitsubishi Jukogyo K.K., Nishi-ku, Hiroshima-shi, Hiroshima-ken (JP); Takashina, Toru, Mitsubishi Jukogyo K.K., Nishi-ku, Hiroshima-shi, Hiroshima-ken (JP); Oshima, Michio, Mitsubishi Jukogyo K.K., Yokohama-shi, Kanagawa-ken (JP); Iwashita, Koichiro, Mitsubishi Jukogyo K.K., Chiyoda-ku, Tokyo (JP)
(74) Representative: Dr. Fuchs, Dr. Luderschmidt Dr. Mehler, Dipl.-Ing. Weiss Patentanwälte

(56) References cited:
- EP-A- 0 373 113
- DE-A- 3 433 759
- DE-A- 3 523 820
- FR-A- 2 507 916
- GB-A- 2 174 083
- US-A- 3 943 230
- DATABASE WPIL Section Ch, Week 8415, Derwent Publications Ltd., London, GB; Class D15, AN 84-092140 & JP-A-59 039 385 (MITSUBISHI HEAVY IND KK) 3 March 1984
- PATENT ABSTRACTS OF JAPAN vol. 013, no. 084 (C-572)27 February 1989 & JP-A-63 270 594 (MITSUBISHI HEAVY IND LTD) 8 November 1988
- DATABASE WPIL Section Ch, Week 8725, Derwent Publications Ltd., London, GB; Class E36, AN 87-172851 & JP-A-62 102 819 (MITSUBISHI METAL KK) 13 May 1987

## Description

This invention relates to a process for treating flue gas, and more particularly to a process for treating by the wet method the flue gas containing sulfur dioxide (SO₂) and hydrogen fluoride (HF), such as flue gas from coal firing equipment.

The commonly known process of flue gas desulfurization by the wet lime method sometimes treats flue gas that contains HF besides sulfur oxides (SOₓ) as harmful components. For example, a flue gas that results from combustion of coal contains about 1000 ppm SOₓ and about 40 ppm HF.

When such flue gas is treated in a wet gas treating column using CaCO₃ as an SO₂ absorbent, the following reactions take place:

CaCO₃ + SO₂ → CaSO₃ + CO₂ (1)

CaCO₃ + 2HF → CaF₂ + CO₂ +H₂O (2)

It is known (Japanese Patent Provisional Publication (Kokai) No. 55-167023) that when this flue gas contains much dust, the aluminum component (Al) in the dust dissolves and reacts with HF in the flue gas to form aluminum-fluorine complexes (AlFx), which in turn hamper the dissolving action of limestone (CaCO₃). The reference cited introduces a method for overcoming this difficulty by the use of a basic sodium salt.

Thus, in the treatment of flue gas that contains SO₂ and HF, the addition of a basic sodium salt in an amount appropriate for the concentration of HF appears to be effective for the prevention of troubles ascribable to AlFₓ. However, because it allows the supplied sodium to be present as dissolved in the absorbing liquid, an attempt to decrease the amount of water discharged will result in an increase in the sodium concentration in the absorbing liquid. When gypsum is to be recovered, recovered gypsum can therefore have a reduced purity.

Another method known to the art for preventing the AlFₓ-induced problems comprises the addition of an alkaline compound in pulses so as to raise the pH of the absorbing liquid temporarily (Japanese Patent Provisional Publication (Kokai) No. 60-122029).

This method has the possibility of reducing the desulfurization efficiency for short periods of time between each temporary efficiency drop and recovery therefrom.

Moreover, a problem common to methods that involve addition of alkali is excessive consumption of alkali which tends to occur more often in proportion to the dust content in the flue gas. The higher the dust concentration, the larger the amount of Al dissolved in the absorbing liquid is, and hence the more serious the hindrance to the dissolving action of limestone becomes because the concentration of produced AlFx increases. To compensate for this hindrance the amount of alkali must be increased, leading to excessive consumption.

In view of the state of the art, an object of the present invention is to provide a process for treating flue gas that contains SO₂ and HF, without the difficulties associated with the conventional processes.

The present invention provides a process for treating flue gas containing both SO₂ and HF by the wet lime-gypsum method using calcium carbonate as an absorbent, wherein an aluminum-containing solution is added to a solution of the absorbent, or absorbing liquid, so that a molar ratio of the concentration of dissolved aluminum to that of dissolved fluorine in said absorbent solution is not less than one.

The present invention makes it possible to eliminate adverse effects of HF and dust in flue gas, maintain the activity of CaCO₃, and secure a high desulfurization rate and secondary production of high purity gypsum.

As stated above, this invention is based upon the discovery that when the concentration ratio of dissolved Al to dissolved F in an absorbing liquid, i.e., the value of the dissolved Al concentration/dissolved F concentration, in terms of the molar ratio, is adjusted to be 1 or more by supplying an aluminum-containing solution, the adverse effects of AlFₓ that occurs in the absorbing liquid and hampers the dissolution of CaCO₃ can be mitigated.

It has been known that in order to separate AlFₓ an alkaline compound is added to raise the pH as described above so as to decompose the AlFₓ into Al(OH)₃ and CaF₂ in the respective solid state form for each constituent Al and F of AlFx. This approach has the above-mentioned unsettled problems. The present inventors have searched for a method alternative to the alkaline additive and found that the adverse effect of AlFₓ upon the dissolving action of CaCO₃ varies materially with the molar concentration ratio of dissolved Al to dissolved F. Based on this finding, it has now become possible to eliminate the hindering effect upon the dissolving action with the adjustment of the dissolved Al-to-F concentration ratio.

Al and F dissolved in a liquid are known to form aluminum-fluorine complexes AlFₓ by establishing the following equilibria. (See, e.g., Chem. Eng. Comm., Vol. 77, p.135 (1989).) In the following equations, "=" represents an equilibrium reaction.

AlF²⁺ = Al³⁺ + F⁻ (3)

AlF₂⁺ = AlF²⁺ + F⁻ (4)

AlF₃ = AlF₂⁺ + F⁻ (5) (5)

AlF₄⁻ = AlF₃ + F⁻ (6)

AlF₅²⁻ = AlF₄⁻ + F⁻ (7)

AlF₆³⁻ = AlF₅²⁻ + F⁻ (8)

AlFₓ can take varied complex forms for x = 1 to 6 and, when the complexes are present in an absorbing liquid, they presumably hamper the dissolution of limestone to varying degrees. The percentages of formation of these complexes are solely dictated by the molar concentration ratio of dissolved Al to dissolved F in the absorbing liquid. With higher values of the ratio, AlFₓ complexes with smaller x values increase.

Usually, the source of aluminum is the flyash contained in flue gas. When flyash is mixed in an absorbing liquid, aluminum dissolves out into the liquid. On the other hand, flue gas, especially that from a coal firing installation, contains large amounts of HF gas, which is absorbed by the absorbing liquid and becomes a fluorine source.

The rate at which aluminum dissolves is governed by the flyash concentration in the flue gas, and the supply rate of fluorine to the absorbing liquid is governed by the HF concentration in the gas. In actual operations, the concentrations of both flyash and HF vary with the kind of coal, operating conditions of the combustion furnace, and other parameters, and accordingly the rates at which aluminum dissolves and fluorine is supplied vary too. As a result, the ratio of dissolved Al to dissolved F in the absorbing liquid also varies, and the degree of hindering limestone dissolution changes for the reason stated above.

According to the process of the invention, because an aluminum-containing solution is introduced from outside into the system, the concentration ratio of dissolved aluminum to fluorine in the absorbing liquid can be controlled within a specific range regardless of the rate at which aluminum dissolves out of flyash.

It has now been found that the adjustment of the molar concentration ratio of dissolved aluminum to dissolved fluorine within the range of one or more will markedly reduce the action of AlFₓ to hinder limestone dissolution, and this favorable effect can be sustained with stability.

If the molar ratio is less than one, the proportion of the complexes AlFₓ with relatively large values of x, as represented by the formulas (3) to (8), is presumably large enough to increase the hindrance to the limestone dissolution.

As for the supply source of aluminum, an Al-containing salt such as aluminum sulfate or aluminum chloride may be used. A solution indirectly obtained by dissolving aluminum out of an Al-containing compound, e.g., an Al-containing solution prepared by dissolving flyash with sulfuric acid, may also be employed.

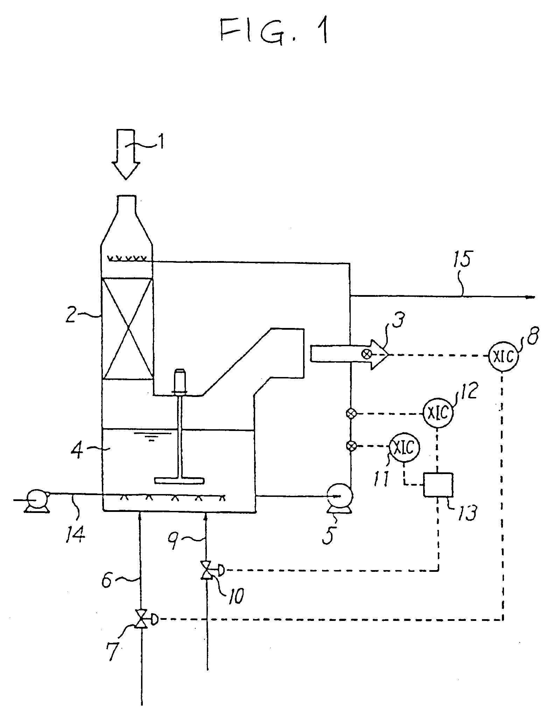

Fig. 1 is a schematic view of an embodiment of the invention.

An example of the invention will now be explained in conjunction with Fig. 1. Flue gas from a small pulverized coal firing equipment (not shown) was partly taken in at the rate of 200 m³N/h and disposed of by the flue gas treating system illustrated in Fig. 1. The temperature of the flue gas to be treated was adjusted to an inlet temperature of 110°C by a heat exchanger (not shown) and the dust concentration to about 200 mg/m³N by a bag filter (not shown).

The inlet SO₂ concentration was 2500 ppm and the HF concentration 55 ppm. The flue gas was introduced via line 1 into an absorption column 2, where SO₂, HF, and dust were removed from the gas, and discharged through line 3. At the bottom of the absorption column integrally provided is a slurry tank 4 for holding an absorbing liquid, and the liquid is pumped up from the tank 4 to the top of the column 2 by an absorbing liquid pump 5. The absorbing liquid comes in contact with the flue gas in the absorption column and then returns to the slurry tank 4.

A CaCO₃ slurry is supplied to the slurry tank 4 via line 6. The flow rate of the CaCO₃ slurry is automatically adjusted by a flow regulating valve 7 through a controller 8 so that the SO₂ concentration in the gas discharged into line 3 from the absorption column is kept at 100 ppm.

Meanwhile, an aluminum sulfate solution is supplied to the slurry tank 4 through line 9, at a flow rate under control by a flow regulating valve 10. During this, dissolved Al and F concentrations in the absorbing liquid line are analyzed by analyzers 11, 12, respectively. The results are input to a computer 13, and the opening of the flow regulating valve 10 is adjusted in conformity with a signal output from the computer to maintain the molar concentration ratio of dissolved Al to dissolved F at a preset molar ratio value. Thus, by the control mechanism so far described, the dissolved Al/dissolved F concentration ratio is constantly adjusted to the preset level.

Into the slurry tank 4 also introduced is the air for oxidation at a predetermined rate through line 14.

The stream of absorbing liquid supplied to the top of the absorption column 2 by the absorbing liquid pump 5 is branched out into line 15, and gypsum is separated from it by a centrifuge (not shown) and taken out of the system as a by-product.

Steady-state operations were performed under the above-mentioned conditions with the exception that the preset value of the dissolved Al/dissolved F concentration ratio in the slurry was varied. In all test runs the operation was stable with the SO₂ concentration in the outlet gas being invariably 100 ppm. The by-product gypsum obtained was subjected to purity analysis. Table 1 gives the results.

**Table 1**

| Relationship between the dissolved Al/dissolved F concentration ratio and the quality level of gypsum | | |
|---|---|---|
| Run No. | Dissolved Al conc./dissolved F conc. (molar ratio) | Purity of by-product gypsum (wt%) |
| 1 | 0.37 | 82.8 |
| 2 | 0.52 | 88.3 |
| 3 | 0.71 | 90.9 |
| 4 | 1.0 | 95.7 |
| 5 | 1.4 | 95.5 |
| 6 | 2.0 | 95.6 |

Table 1 shows that the larger the molar concentration ration of dissolved Al to dissolved F, the higher the purity of by-product gypsum becomes. The high purity is maintained stably if the ratio is 1.0 or more.

As a comparative example, an experiment was conducted with the same arrangements and under the same gas conditions as those used in the preceding example, excepting that the regulating valve 10 was fully closed manually to cut off the supply of the aluminum sulfate solution. Operation under the conditions that the outlet SO₂ concentration was kept at 100 ppm as in the above example afforded by-product gypsum with a purity of 78.0 (wt%). Thus, despite the same desulfurization rate achieved as in the above example, the purity of the resulting by-product gypsum was very low.

## Claims

1. A process for treating flue gas containing both sulfur dioxide and hydrogen fluoride by a wet lime-gypsum method using a calcium carbonate solution as an absorbent solution, wherein an aluminum-containing solution is added to said absorbent solution in such a way that the molar ratio of the concentration of dissolved aluminum to that of dissolved fluorine in said absorbent solution is not less than one.

2. The process as claimed in claim 1, wherein said aluminum-containing solution is a solution of a compound selected from the group of aluminum sulfate or aluminum chloride.

3. The process as claimed in claim 1, wherein said aluminum-containing solution is obtained by dissolving an aluminum component from an aluminum containing material.

4. The process as claimed in claim 1, wherein said aluminum-containing solution is prepared by dissolving flyash with sulfuric acid.

## Patentansprüche

1. Verfahren zur Behandlung von Rauchgas mit sowohl Schwefeldioxid als auch Fluorwasserstoff mittels eines nassen Kalk-Gips-Verfahrens unter Verwendung einer Calciumcarbonatlösung als absorbierende Lösung, wobei eine aluminiumhaltige Lösung der absorbierenden Lösung so zugesetzt wird, daß in der absorbierenden Lösung das molare Verhältnis der Konzentration an gelöstem Aluminium zu der an gelöstem Fluor nicht kleiner als eins ist.

2. Verfahren nach Anspruch 1, in welchem die aluminiumhaltige Lösung eine Lösung einer Verbindung ist, welche ausgewählt ist aus der Gruppe Aluminiumsulfat oder Aluminiumchlorid.

3. Verfahren nach Anspruch 1, in welchem die aluminiumhaltige Lösung durch Auflösen einer aus aluminiumhaltigem Material gewonnenen Aluminiumverbindung erhalten wird.

4. Verfahren nach Anspruch 1, in welchem die aluminiumhaltige Lösung durch Auflösen von Flugasche mit Schwefelsäure hergestellt wird.

## Revendications

1. Procédé pour le traitement des fumées contenant aussi bien de l'anhydride sulfurique que du fluorure d'hydrogène par une méthode à la chaux-gypse humide utilisant une solution de carbonate de calcium comme solution absorbante, où on ajoute une solution contenant de l'aluminium à ladite solution absorbante de sorte que le taux molaire des concentrations en aluminium dissous à celles en fluor dissous dans ladite solution absorbante ne soit pas inférieur à 1.

2. Procédé selon la revendication 1, où ladite solution contenant de l'aluminium est une solution d'un composé pris dans le groupe du sulfate d'aluminium ou de chlorure d'aluminium.

3. Procédé selon la revendication 1, où ladite solution contenant de l'aluminium est obtenue par dissolution du constituant aluminium à partir d'une matière contenant de l'aluminium.

4. Procédé selon la revendication 1 où ladite solution contenant de l'aluminium est préparée par dissolution des cendres volantes dans l'acide sulfurique.
